# EUROPEAN PATENT APPLICATION

(11) **EP 1 603 121 A1**
(43) Date of publication of application: **07.12.2005**
(21) Application number: 04704766.7
(22) Date of filing: 23.01.2004
(51) Int. Cl.: G11B 7/004, G11B 19/12, G11B 20/10, G11B 27/34, G11B 33/10

(54) **INFORMATION RECORDING DEVICE AND MEDIUM INFORMATION NOTIFICATION METHOD**

(30) Priority: 10.03.2003 JP 2003063340
(71) Applicant: SONY CORPORATION, Tokyo 141-0001 (JP)
(72) Inventor: OKADA, Shunji, (JP)
(74) Representative: DeVile, Jonathan Mark
(86) International application number: PCT/JP2004/000603
(87) International publication number: WO 2004/081923

(57) **Abstract**

To allow using laser lights with different wavelengths, as required, according to an optical-recording medium to be used and notifying a user of various information about the optical-recording medium which is inserted.

A DVD drive 2 reads various information items that include a read-in area of an inserted DVD and that are provided on the inner-periphery side with respect to the read-in area, and it is determined whether the inserted DVD is for red data or a blue laser based on the information items. According to the determination result and the detection result, a system-control unit 18 of an information-processing unit 1 controls a video/audio-I/F unit 13 so that the determination result is displayed on an LCD 12. Where the inserted DVD is a red-laser DVD, the determination result is displayed by the color display corresponding to a red-wavelength region, and where the inserted DVD is a blue-laser DVD, the determination result is displayed by the color display corresponding to a blue-wavelength region.

## Description

### Technical Field

The present invention relates to an apparatus and a method that allows notifying a user of information about an optical-recording medium such as a DVD (Digital Versatile Disk), where the optical-recording medium is used.

### Background Art

DVD-ROMs functioning as read-only optical disks are used, as large-capacity optical-recording mediums. Further, DVD-Rs (DVD-Recordable) functioning as write-once optical-recording mediums, DVD-RWs (DVD ReWritable) functioning as rewritable optical recording mediums, and so forth are presented, as optical-recording mediums that can be reproduced by a DVD-ROM drive (a DVD-ROM reproducer).

Further, there is a DVD Video Format functioning as a record format that is used, where image data or the like is recorded onto the above-described DVD-R and DVD-RW. Further, a DVD Video Recording Format is presented, as a record format that can be used, where image data or the like is recorded onto the DVD-RW.

Here, the DVD-video format is inherently provided for the DVD-ROM and adequate for additional-data recording. Where image data and/or speech data is recorded onto the DVD-R by using the DVD-video format, so-called finalization processing is required, so as to use the DVD-R by a reproducer different from a recorder. The finalization processing is predetermined processing performed for generating predetermined information referred to as so-called VMG (Video Manager) information based on information recorded onto the DVD-R and recording the VMG information onto the DVD-R.

That is to say, the finalization processing denotes processing performed for eventually making the DVD-R enter the additional-recording prohibition state, where data is additionally recorded onto the DVD-R in the DVD-video format, and closing the DVD-R, as a DVD-ROM compatible disk and a data disk that can be read by a DVD-ROM drive.

On the other hand, the DVD-video recording format has editing flexibility and has a data structure allowing making edits including scene deletion, scene addition, and so forth with relative ease. The DVD-video recording format is mainly used for the DVD-RW which is a rewritable disk-recording medium. Further, the DVD-video recording format does not require the finalization processing, even though the finalization processing is required for the above-described DVD-video format.

Thus, in addition to the DVD-ROM, the DVD-R capable of additional recording and the rewritable DVD-RW that are compatible with the DVD-ROM are widely used. Where image data or the like is recorded onto the DVD-R and/or the DVD-RW, it is required that a user be notified of the free capacity of the DVD-R and/or the DVD-RW used for recording with precision in view of the convenience of the user.

Japanese Unexamined Patent Application Publication No. 2001-351363 discloses a technology used for a video camera that uses a CD-R (Compact Disc Recordable), as a recording medium. Although the CD-R is not a DVD medium, it is the same optical-recording medium as the DVD. The technology allows displaying the free area of the CD-R and whether or not the close-session processing corresponding to finalization processing performed for the DVD-video format is performed.

To the technology disclosed in Japanese Unexamined Patent Application Publication No. 2001-351363 allows knowing the capacity of an optical disk used for recording and notifying the user of whether or not the close-session processing is performed. Subsequently, the user can correctly understand the free space and appropriately determine whether or not the free capacity is adequate. Further, the technology has an advantage so that processing adapted to cancel the close-session processing can be performed immediately, where data is further recorded onto the optical disk subjected to the close-session processing.

Further, where image data or the like is recorded onto an optical recording medium including the DVD or the like, a red laser with a wavelength of 635 nm (nanometer), 650 nm (nanometer), and so forth is generally used. However, in the future, a blue laser with a short wavelength of 405 nm, for example, may be used.

A blue-laser DVD onto which data is recorded by using the blue laser with the wavelength of about 405 nm has a recording surface density four times higher than that of a red-laser DVD onto which data is recorded by using a currently-used red laser. Namely, the blue-laser DVD has a record density four times higher than that of the red-laser DVD.

Further, for example, the light reflectivity, track pitch, and so forth of the red-laser DVD are different from those of the blue-laser DVD, so that either the red-laser DVD or the blue-laser DVD needs to be used, as required. However, considering the fact that the red laser is widely used, the red-laser DVD and the blue-laser DVD should coexist so that either the red-laser DVD or the blue-laser DVD can be used, as required, according to intended use and/or preferences.

Therefore, considering the convenience of the user, a recorder and/or a reproducer that can switch between the red laser and the blue laser for use according to the type of an optical disk should be offered. In the above-described recorder that has both a red-laser-light source and a blue-laser-light source that are mounted thereon and that can use the red-laser-light source and the blue-laser-light source by switching therebetween, it is preferable that a laser light used for recording be automatically selected according to whether the DVD to be used is the red-laser DVD or the blue-laser DVD.

In that case, as described above, the recording capacity of the red-laser DVD is significantly different from that of the blue-laser DVD. Subsequently, the user may mistake the red-laser DVD for the blue-laser DVD, for example, so that all of target information cannot be recorded due to insufficient capacity.

Therefore, it is preferable that the user be notified of information about whether or not the DVD to be used is for a red laser or a blue laser and how much the free capacity of the DVD to be used is. Further, it is preferable that the user be capable of knowing the above-described information with ease and precision.

Further, since the DVD-R is used only for additional recording, image data and/or speech data is recorded in the DVD-video format. If it is possible to notify the user of information about whether or not the above-described finalization processing is finished, the convenience of the user increases.

Particularly, since a disk medium and a battery area are often inserted into and/or extracted from a mobile video camera that uses a DVD, as a recording medium, it is preferable that the user be plainly notified of information about whether the DVD is a red-laser disk or a blue-laser disk and the disk's-remaining-amount display by visual recognition of a screen, as soon as the power is turned on again, even though the mobile video camera is left with the medium inserted therein.

Accordingly, an object of the present invention is to provide an apparatus and a method that allow using each of laser lights with different wavelengths, as required, according to an optical-recording medium to be used and plainly notifying a user of various information about the optical-recording medium which is inserted.

### Disclosure of Invention

For achieving the above-described object, an information-recording apparatus according to Claim 1 comprises:
determination means adapted to determine the wavelength region of a laser light used for writing/reading data on an optical-recording medium based on information acquired from the optical-recording medium,
notification means adapted to notify a user of the wavelength region of the laser light, the wavelength region being determined by the determination means, and
selection means adapted to select the laser light of the wavelength region, the wavelength region being determined by the determination means, as the laser light used for writing/reading the data.

In the information-recording apparatus according to Claim 1 of the present invention, the wavelength of the laser light used for writing/reading the data on the optical-recording medium is determined based on the information acquired from the optical-recording medium that is inserted and used. More specifically, the determination means determines whether or not the optical-recording medium is for a red laser with a wavelength of 650 nm or a blue laser with a wavelength of 405 nm. Subsequently, the notification means notifies the user of the determination result obtained by the determination means and the selection means selects the laser light used for writing/reading the data based on the determination result obtained by the determination means.

Accordingly, it becomes possible to determine the laser light used for recording based on the information acquired from the optical recording medium to be used without troubling the user, notify the user of the determination result, and automatically select the laser light used for recording based on the determination result.

### Brief Description of the Drawings

Fig. 1 is a block diagram illustrating a DVD-digital video camera according to an embodiment of an apparatus and/or a method of the present invention.
Fig. 2 is a block diagram illustrating a DVD drive of the DVD-digital video camera shown in Fig. 1.
Fig. 3 illustrates the physical format of a DVD-ROM.
Fig. 4 illustrates the physical format of a DVD-R.
Figs. 5A and 5B illustrate the case where data is recorded onto the DVD-R in a DVD-video format.
Fig. 6 illustrates the format of a read-in-area part of a DVD-RW.
Figs. 7A and 7B illustrate a DVD having a burst-cutting area.

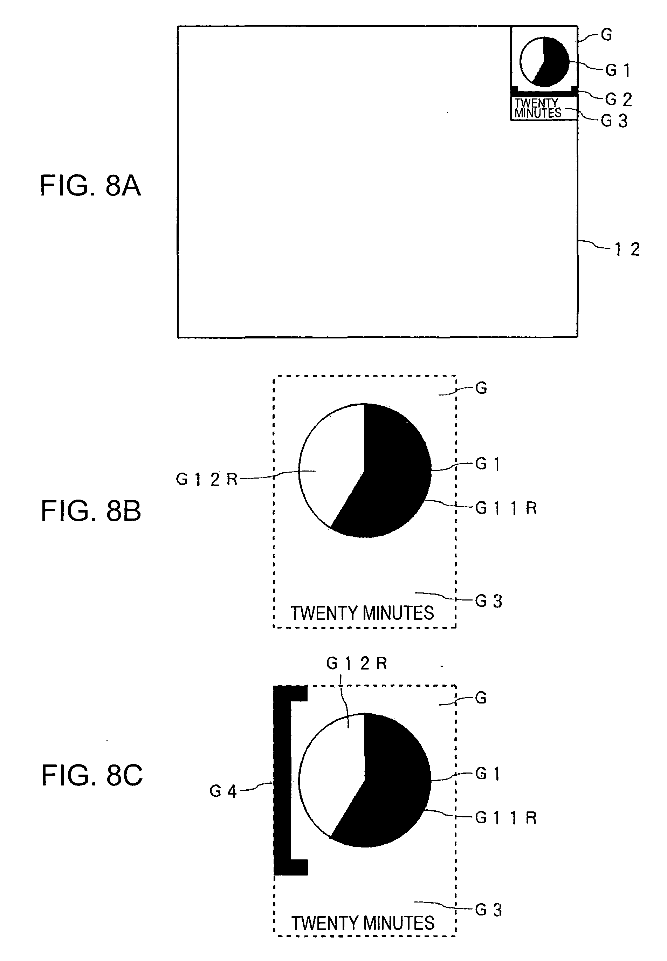

Each of Figs. 8A, 8B, and 8C illustrates an example display used for notifying a user of the disk type, the free capacity, and whether or not finalization is performed.

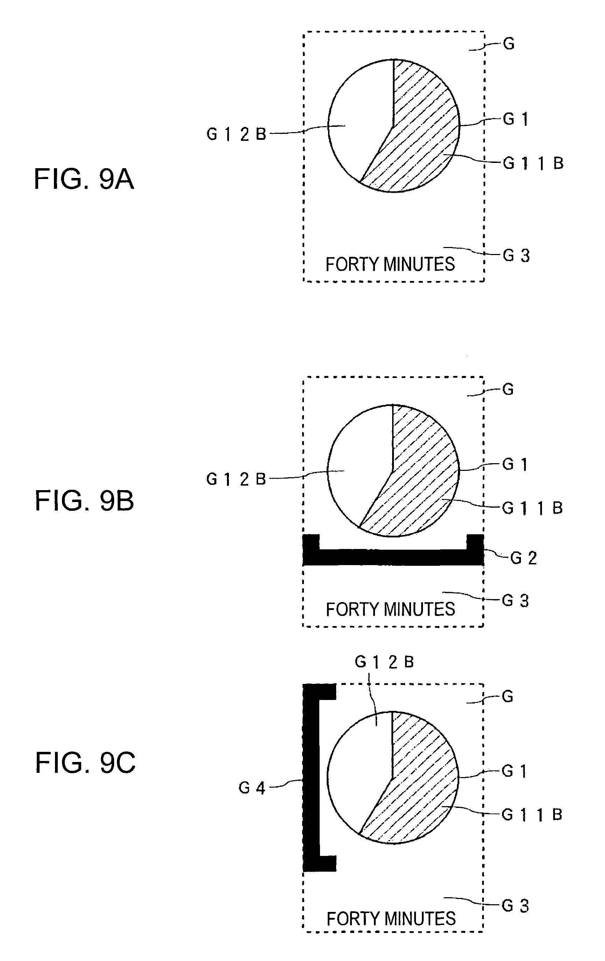

Each of Figs. 9A, 9B, and 9C illustrates an example display used for notifying the user of the disk type, the free capacity, and whether or not the finalization is performed.

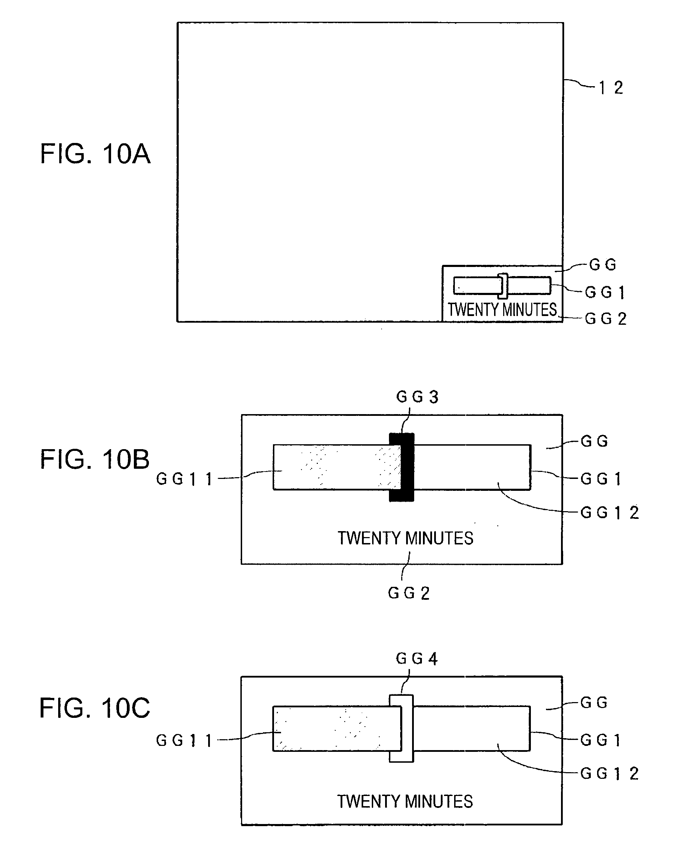

Each of Figs. 10A, 10B, and 10C illustrates an example display used for notifying the user of the disk type, the free capacity, and whether or not the finalization is performed.

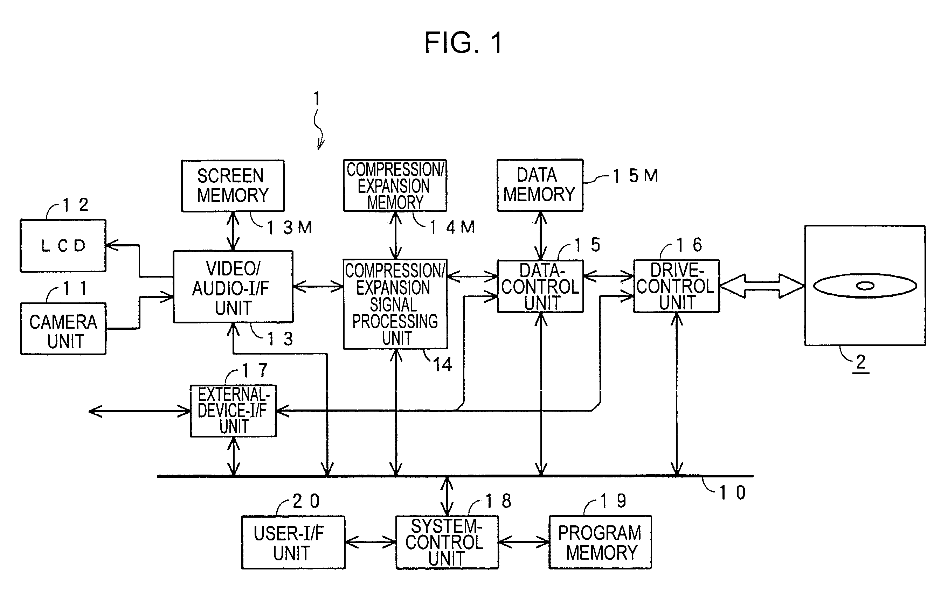

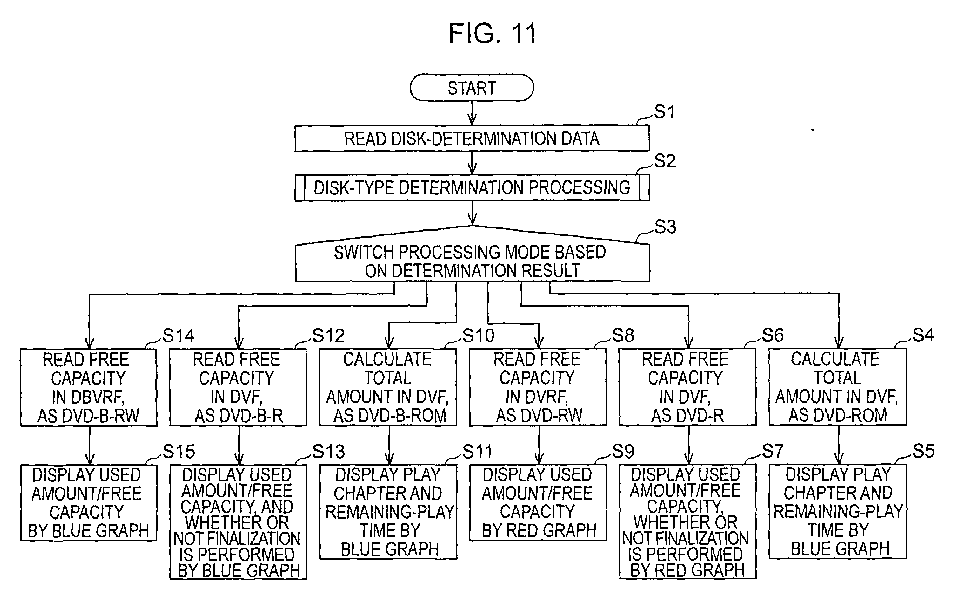

Fig. 11 is a flowchart illustrating medium-information-notification processing performed by the DVD-digital video camera shown in Fig. 1.

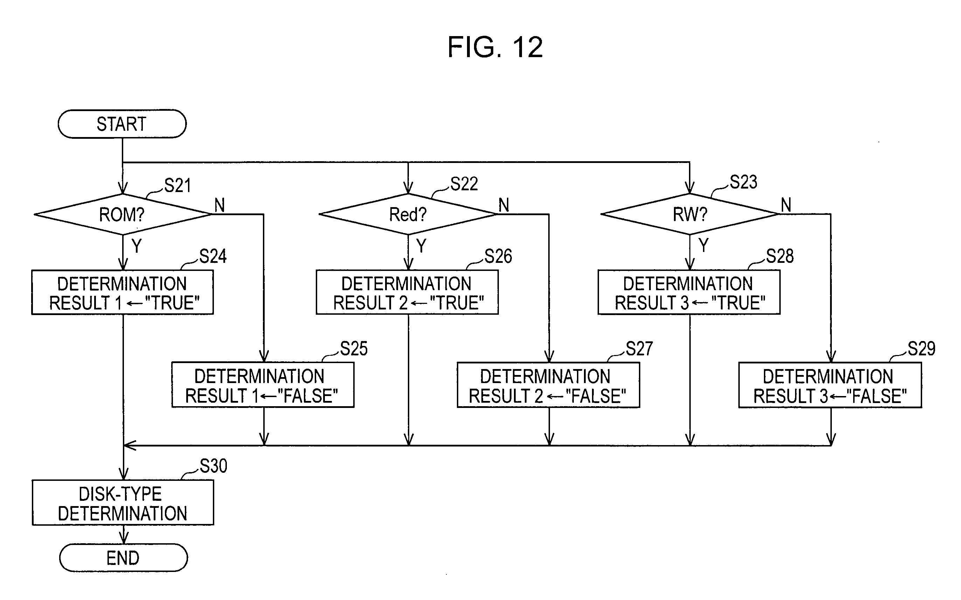

Fig. 12 is a flowchart illustrating processing performed at step S2 shown in Fig. 11.

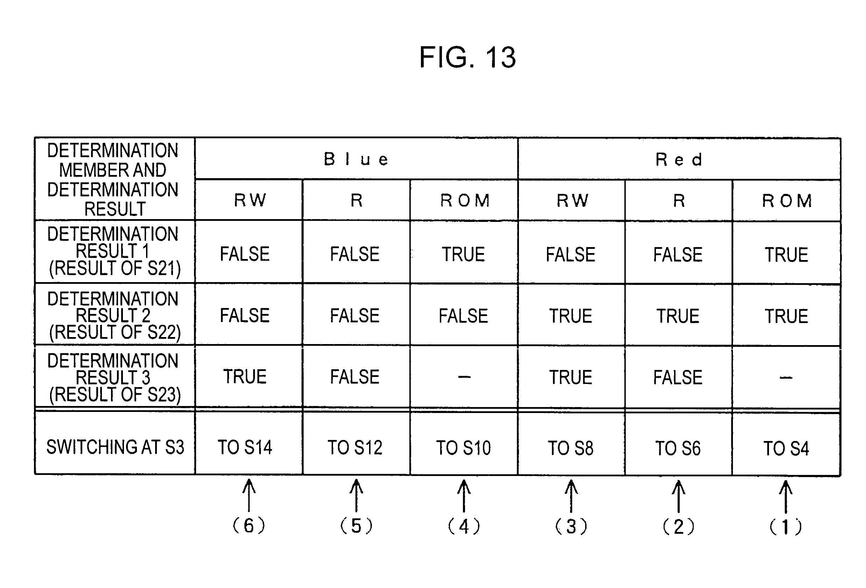

Fig. 13 illustrates a disk-type-determination table used at step S30 shown in Fig. 12.

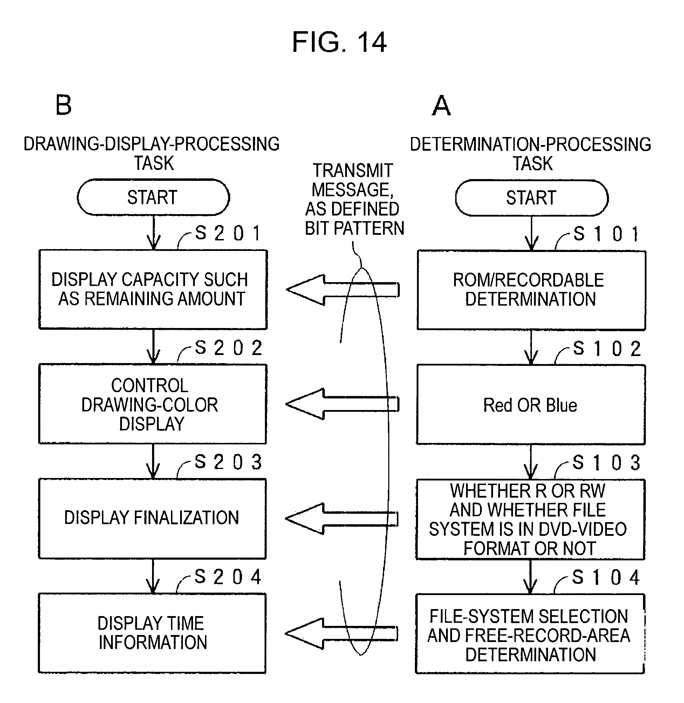

Fig. 14 is a flowchart illustrating a disk-type-determination-processing task performed on the DVD-drive-2-side and a graphic-display-processing task performed on the information-processing-unit-1 side.

### Best Modes for Carrying Out the Invention

Hereinafter, an apparatus and a method according to an embodiment of the present invention will be described with reference to the attached drawings. According to the embodiment described below, the apparatus and the method of the present invention are applied for a digital video camera using a DVD, as a recording medium (DVD-digital-video camera).

Fig. 1 is a block diagram provided for illustrating the DVD-digital-video camera of this embodiment. As shown in Fig. 1, the DVD-digital-video camera of the embodiment includes an information-processing unit 1 and a DVD drive 2 that are provided in one and the same cabinet. Hereinafter, the configuration and operations of the information-processing unit 1 and those of the DVD drive 2 will be described separately.

### [Information-processing unit (host apparatus) 1]

First, the information-processing unit 1 having the function of a host apparatus will be described. As shown in Fig. 1, the information-processing unit 1 includes a camera unit 11, a color LCD (Liquid Crystal Display) 12, a video/audio interface unit (hereinafter referred to as a video/audio I/F unit) 13, a compression/expansion-signal processing unit 14, a data-control unit 15, a drive-control unit 16, an external-appliance interface unit (hereinafter referred to as an external-appliance I/F) 17, a system-control unit 18, a program memory 19, and a user-interface unit (hereinafter referred to as a user I/F unit) 20.

As shown in Fig. 1, the video/audio I/F unit 13, the compression/expansion-signal processing unit 14, and the data-control unit 15 include a screen memory 13M, a compression/expansion memory 14M, and a data memory 15M, respectively, where the memories are mainly used, as work areas.

In the information-processing unit 1 of the DVD-digital-video camera of the embodiment, the system-control unit 18 is configured to control each of the units of the DVD-digital-video camera of the embodiment and includes, though not shown, a CPU (Central Processing Unit), a RAM (Random Access Memory) used as a work area, an EEPROM (Electrically Erasable and Programmable ROM) configured to store and hold setting parameters and various types of data that should be held even though the power is shut down, and a nonvolatile memory such as a flash memory.

As shown in Fig. 1, the program memory 19 and the user I/F 20 are connected to the system-control unit 18. The program memory 19 stores various programs executed by the system-control unit 18 and data required for processing. Further, as described above, the DVD drive 2 of the DVD-digital-video camera of the embodiment can use either of two laser lights with different wavelengths, namely, a red laser light and a blue laser light, as required. Further, the program memory 19 includes file systems configured to perform the file management corresponding to each of different DVDs in which data is stored by using the laser lights with different wavelengths.

Namely, a UDF-bridge file system in a DVD-video format and a UDF file system in a DVD-video recording format that are used for a red laser, and a UDF-file system in a DVD-blue-video format and a UDF file system in a DVD-blue-video-recording format that are used for a blue laser are incorporated into the program memory 19.

Further, the user I/F 20 has a plurality of function keys, button switches, and slide keys, receives various instructions to start photographing, stop photographing, start reproduction, stop reproduction, and so forth that are transmitted from a user, and notifies the system-control unit 18 of the instructions. Subsequently, the system-control unit 18 controls each of the units according to the instruction transmitted from the user, so as to perform the processing corresponding to the instruction of the user.

Then, in the DVD-digital-video camera of the embodiment, the camera unit 11 and the color LCD 12 are connected to the video/audio I/F unit 13, as shown in Fig. 1.

The camera unit 11 includes a lens, a CCD (Charge Coupled Device), and so forth, converts the image of a subject transmitted through the lens into an analog-video signal by using the CCD, and transmits the analog-video signal to a circuit unit in a subsequent stage. Although not shown, a microphone is provided near the camera unit 11 so that speech is collected during photographing is performed. The collected speech is converted into an electric signal and captured.

The LCD 12 is configured to display an image captured by the camera unit 11 and/or a reproduced image generated from video data read from a DVD inserted into the DVD drive 2 in color. Further, for example, a speaker is provided near the color LCD 12, though not shown, so that the speech collected by the microphone and/or reproduced speech generated from speech data read from the DVD inserted into the DVD drive 2 comes out.

Upon receiving the analog-video signal transmitted from the camera unit 11 and an analog-speech signal transmitted from the microphone, the video/audio I/F unit 13 converts these signals into digital signals in a format that can be processed by itself and transmits the converted video data and speech data to the compression/expansion-signal processing unit 14 in a subsequent stage. Thus, the video/audio I/F unit 13 can capture video and speech transmitted from the camera unit 11 or the like.

Further, the video/audio I/F unit 13 converts video data and speech data that are expanded and transmitted from the compression/expansion-signal processing unit 14 into analog signals, transmits the analog-video signal to the color LCD 12 and transmits the analog-speech signal to the speaker. Thus, the video/audio I/F unit 13 can externally transmit video and speech from itself.

The compression/expansion-signal processing unit 14 compresses the video data and speech data transmitted from the video/audio I/F 13 according to a predetermined method and transmits the compressed video data and speech data to the data-control unit 15 in a subsequent stage. Further, the compression/expansion-signal processing unit 14 expands the compressed video data and speech data that are transmitted from the data-control unit 15, and transmits the expanded video data and speech data to the video/audio I/F unit 13.

The data-compression method used by the compression/expansion-signal processing unit 14 may be, in the case of a still image, JPEG (Joint Photographic Experts Group), MPEG (Moving Picture Experts Group), and a method whose function is an extension of that of JPEG and/or MPEG, where the method shall be used in future, as a replacement for JPEG and/or MPEG. Further, in the case of moving images, data-compression method may be, for example, MPEG2 and a method whose function is an extension of that of MPEG2, where the method shall be used in future, as a replacement for MPEG2. For example, the JPEG 2000 system currently studied by the standardization association CIPA may be used, as a still-image compression method. Further, in the case of high-quality moving images, a compression system referred to as MPEG4-AVC may be used, where attention is given to the HD (hard disk)-capable high compression rate thereof. Of course, various systems can be used without being limited to the above-described systems.

The data-control unit 15 performs time-base correction for video data and/or speech data between an asynchronous DVD-digital-video camera and a DVD inserted into the DVD-digital-video camera by using the data memory 15M including an SDRAM (Synchronous Dynamic RAM) or the like, as a buffer memory.

Therefore, where the video data and/or speech data obtained through the camera unit 11 is recorded onto the DVD inserted into the DVD drive 2, the data transmitted from the compression/expansion-signal processing unit 14 is stored in the data memory 15M via the data-control unit 15 and data that had been stored in the data memory 15M is read by the data-control unit 15, transmitted to the drive-control unit 16, and stored in the DVD inserted into the DVD drive 2, as will be described later.

Further, the video data and/or speech data that is supplied via the drive-control unit 16 and read from the DVD inserted into the DVD drive 2 is stored in the data memory 15M via the data-control unit 15. The data that had already been stored in the data memory 15M is read by the data-control unit 15, transmitted to the compression/expansion-signal processing unit 14, subjected to the data expansion and the digital/analog conversion, as described above, and externally transmitted.

Thus, the data memory 15M is used in a so-called First-In-First-Out system. For example, video data and/or speech data that is continuous with respect to time and transmitted from the camera unit 11 can be recorded onto the DVD inserted into the DVD drive 2 without interruption. Further, the video data and/or speech data that is continuous with respect to time and recorded onto the DVD inserted into the DVD drive 2 can be reproduced without interruption.

Then, the drive-control unit 16 is formed, as a connection interface between the information-processing unit 1 and the DVD drive 2. In this embodiment, the drive-control unit 16 is formed, for example, as an ATAPI interface having a so-called Mt. Fuji multimedia command set which is installed thereon, where the Mt. Fuji multimedia command set is an optical-disk-drive command standard.

The official name of the Mt. Fuji multimedia command is officially referred to as SFF8090i v5 Small Form Factor Committee Specification of: Mt. Fuji commands for Multimedia Devices.

Of course, without being limited to the above-described interface, various interfaces including an interface developed to support a serial system, a radio-communication interface, and so forth that can use an optical-disk packet command and other interfaces can be used.

Further, as has been described, the data transmitted from the data-control unit 15 is transmitted to the DVD drive 2 via the drive-control unit 16 and recorded onto the DVD inserted into the DVD drive 2. Further, the data read from the DVD inserted into the DVD drive 2 is transmitted to the data-control unit 15 via the drive-control unit 16, so as to be reproduced via the data-control unit 15, the compression/expansion-signal processing unit 14, and the video/audio I/F unit, as described above.

Further, the DVD-digital video camera of the embodiment includes the external-appliance I/F unit 17. The external-appliance I/F unit allows, for example, connecting the DVD-digital video camera to an external appliance such as a personal computer and is formed, as a USB (Universal Serial Bus) circuit, for example. Where the external-appliance I/F unit 17 is used, data can be transmitted and received via the data-control unit 15 and the drive-control unit 16, or the drive-control unit 16.

### [DVD drive 2]

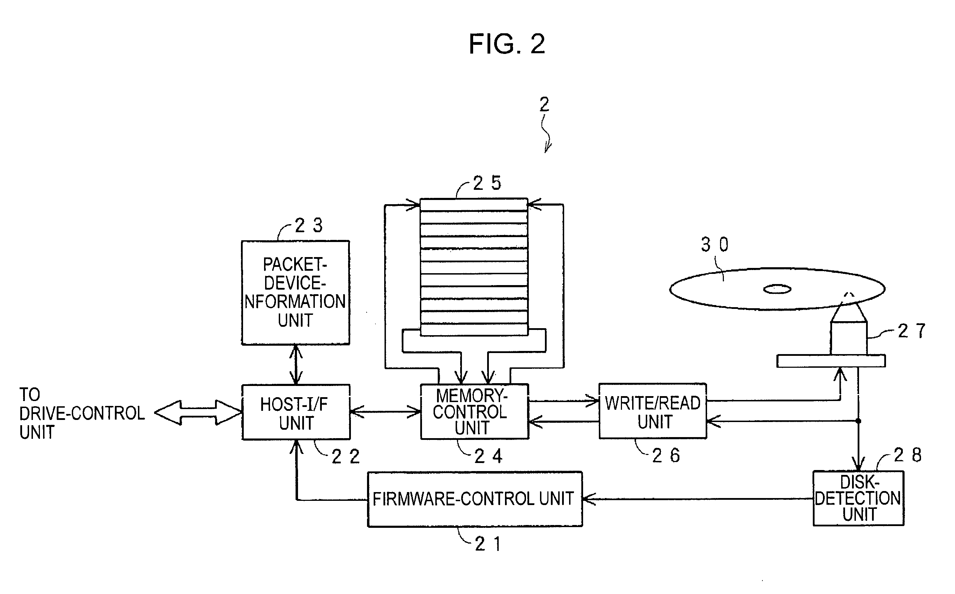

Next, the DVD drive 2 will be described. Fig. 2 is a block diagram illustrating the DVD drive 2 installed on the DVD-digital video camera of the embodiment. As shown in Fig. 2, the DVD drive 2 includes a firmware-control unit 21, a host interface unit (hereinafter referred to as a host I/F unit) 22, a packet-device-information unit 23, a memory-control unit 24, a drive-cache memory 25, a write/read unit 26, an optical-head unit (OPD: Optical Pickup Device) 27, and a disk-detection unit 28. Further, in Fig. 2, a DVD 30 denotes an optical recording medium (DVD) inserted into the DVD drive 2.

In Fig. 2, the host I/F unit 22 is connected to the drive-control unit 16 of the information-processing unit 1 functioning as the host apparatus via the ATAPI interface so that data can be transmitted and received between the DVD drive 2 and the information-processing unit 1. The packet-device-information unit 23 performs packet transfer for data such as the command corresponding to the above-described Mt. Fuji command set between itself and the information-processing unit 1 by asynchronous hand shaking via the host I/F unit 22.

Then, where the data transmitted from the information-processing unit 1 is recorded onto a DVD 30, data transmitted from the information-processing unit 1 is transmitted to the memory-control unit 24 via the host-I/F unit 22. The memory-control unit 24 uses the drive-cache memory 25, as a buffer memory, so as to transmit the data to the write/read unit 26 without interruption.

Where the data is recorded, the write/read unit 26 adds a CRC (Cyclic Redundancy Check) error-correction code and performs modulation processing, thereby generating a signal to be recorded. Then, the write/read unit 26 transmits the generated signal to be recorded to the optical-head unit 27. The optical-head unit 27 irradiates the inserted DVD 30 with the laser light for recording corresponding to the signal to be recorded transmitted from the write/read unit 26, so as to record the signal to be recorded onto the DVD 30.

Further, where the data is reproduced, the optical-head unit 27 irradiates the DVD 30 with a laser light used for reading, receives a light reflected therefrom, and converts the reflected light into an electrical signal. The electrical signal is transmitted to the write/read unit 26. In that case, the write/read unit 26 performs demodulation processing, decoding processing for the CRC-error-correction code, error correction, and so forth, for the electrical signal transmitted from the optical-head unit 27. Then, the write/read unit 26 transmits the demodulated data to the host-I/F unit 22 via the memory-control unit 24. Then, the demodulated data is transmitted to the information-processing unit 1 via the host I/F unit 22.

Further, the DVD drive 2 includes the disk-detection unit 28 configured to read information such as the type of a disk by reading the discrimination information of an inserted DVD, where the DVD is inserted, upon receiving the signal obtained by converting the reflected light of the laser light applied from the optical-head unit 27 into the electrical signal.

The DVD drive 2 further includes the firmware-control unit 21 configured to determine the type of a DVD upon receiving a detection result transmitted from the disk-detection unit 28. The determination result obtained by the firmware-control unit 21 is transmitted to the information-processing unit 1 functioning, as the host apparatus by a handshake protocol, via the host-I/F unit 22. Further, the firmware-control unit 21 also functions, as a system controller configured to control each of the units of the DVD drive.

Further, in the DVD-digital video camera of the embodiment, the optical-head unit 27 can use either of two laser lights with different wavelengths, namely, a known red laser light (with a wavelength of 650 nm, for example) and a blue laser light (with a wavelength of 405 nm, for example), according to the inserted DVD, as described above.

Further, more specifically, information about a DVD, such as the type of a DVD inserted into the DVD drive 2 is displayed on a display screen of the color LCD 12 via the video/audio I/F unit 13 controlled by the system-control unit 18 of the information-processing unit 1 so that the DVD information is transmitted to a user of the DVD-digital video camera, as described later.

The DVD that can be inserted into the DVD drive 2 of the DVD-digital video camera of the embodiment for use may be a DVD-ROM, a DVD-R, and a DVD-RW. Each of the DVD-ROM, the DVD-R, and the DVD-RW includes a known DVD into which data is written by using a red laser light and a DVD-Blue into which data is written by using a blue laser light. The disk-discrimination information of each of the DVDs is recorded onto a reflection layer of the disk. Further, there are DVDs whose disk-discrimination information is recorded by burst cutting, which can be used for the embodiment.

That is to say, the DVD medium which can be used for the DVD-digital video camera of the embodiment includes, (1) a red-laser DVD-ROM, (2) a red-laser DVD-R, (3) a red-laser DVD-RW, (4) a DVD that is a red-laser medium and that uses burst cutting for medium-discrimination information, (5) a blue-laser DVD-ROM, (6) a blue-laser DVD-R, (7) a blue-laser DVD-RW, and (8) a DVD that is a blue-laser medium and that uses burst cutting for medium-discrimination information.

In the DVD-digital video camera of the embodiment, the disk-detection unit 28 and the firmware-control unit 21 of the DVD drive 2 function, so as to determine to which type (kind) of the above-described DVDs (1) to (8) the inserted DVD corresponds and how much the free space of the DVD is. Further, where data is recorded onto the DVD in a DVD-video format, it is detected whether or not finalization is performed, and the user is notified of the detected information about the recording medium via the color LCD 12 with high viewability.

### [The DVD type and Method for determining same]

Next, each of the DVD-ROM, the DVD-R, the DVD-RW, and the DVD using burst cutting for medium-discrimination information that are DVD mediums that can be used for the DVD-digital video camera of the embodiment will be described.

### [DVD-ROM]

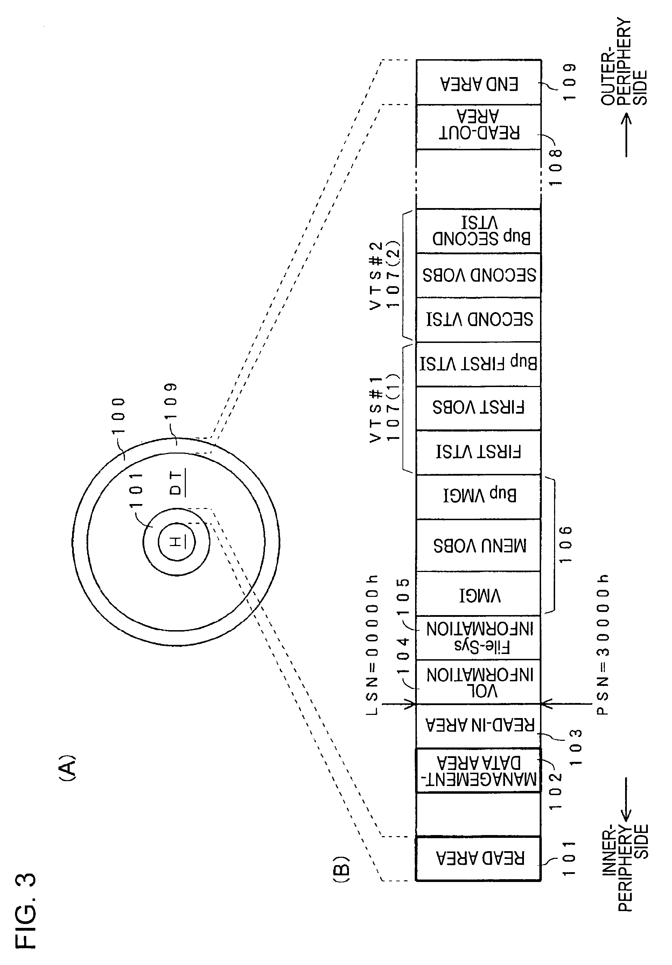

First, the DVD-ROM will be described. Fig. 3 is provided for illustrating the physical format of the DVD-ROM. As shown in Fig. 3(A), a DVD-ROM 100 has a center hall H at the center thereof, so as to be fixed to a spindle motor of a reproduction device, and a read area 101, a data area DT, and an end area 109 in that order from the inner-periphery side.

The data area DT includes a management-data area 102, a read-in area 103, a VOL (volume) -information area 104, a File-Sys (file system)-information area 105, a VMG (Video Manager)-information area 106, a VTS (Video Title Set) areas 107(1), 107(2), ..., a read-out area 108, and the end area 109 in that order from the inner-periphery side, as shown in Fig. 3(B).

The VMG-information area 106 includes a VMGI (Video Manager Information) area, a menu VOBS (Video Object Set) area, and a Bup (Backup) VMGI area, as shown in Fig. 3(B). Further, the VTS areas 107(1), 107(2), ... are portions on which video information and speech information are recorded. Each of the VTS areas 107(1), 107(2), ... has an identification number and is independently managed.

Further, each of the VTS areas 107(1), 107(2), ... has, for example, the video information and speech information of a single product such as a movie or a broadcast program that the producer of the product wishes to present to audiences. Otherwise, where the single product is divided into a plurality of parts, each of the VTS areas 107(1), 107(2), ... includes information of a single title, that is, a single group of the video information and speech information of each of the parts.

Then, information about a medium, such as a type-discrimination code indicating the medium type is stored in the read area 101 provided at the inner-most-periphery side of the DVD-ROM 100 and discrimination information used for discriminating the disk from other disks and other required information are stored in the management-data area 102.

Further, the read-in area 103 stores information that is read at the time where the information is reproduced, such as information about the position where the stored information starts and the volume-information area 104 stores information that is used for discriminating the entire information stored in the DVD-ROM 100. Further, the file-system area 105 stores information indicating the file configuration of data in the VMG-information area 106 and the VTS areas 107 (1), 107(2), ....

Then, the VMG-information area 106 stores, for example, a management table used for managing the entire information stored in the VMGI area, a menu showing the name of each title, an access table for accessing each of the titles (VTS), and backup information of the above-described information. The read-out area 108 on the outermost-periphery side stores termination information that is read at the time where reproduction of the stored information is terminated.

Then, in Fig. 3(B), the type of a disk can be determined based on a type-discrimination code of a read area that can be grasped by the firmware-control unit 21 of the DVD drive 2, where the read area starts backward from a logical sector number (LSN) = 00000h (h denotes Hexadecimal Numbers. The same can be said in the following description.) and a physical sector number (PSN) = 30000h.

Further, since the reflection-signal level of a record layer of the area starting backward from the logical sector number (LSN) = 00000h and the physical sector number (PSN) = 30000h of the DVD-R and/or the DVD-RW is lower than that of the DVD-ROM by as much as several tens of percent, it becomes possible to read the information about the management-data area 102 by using a red laser and discriminate between a ROM disk and other disks based on the level of the read signal (the level of a light reflected from the management-data area 102).

As has been described, where the DVD-ROM is used, it becomes possible to discriminate between the red-laser DVD-ROM and the blue-laser DVD-ROM based on the type-discrimination code of the read area 101 on the innermost-periphery side. Further, it becomes possible to discriminate between the DVD-ROM and the other disks based on the level of light reflected from the management-data area 102.

### [DVD-R]

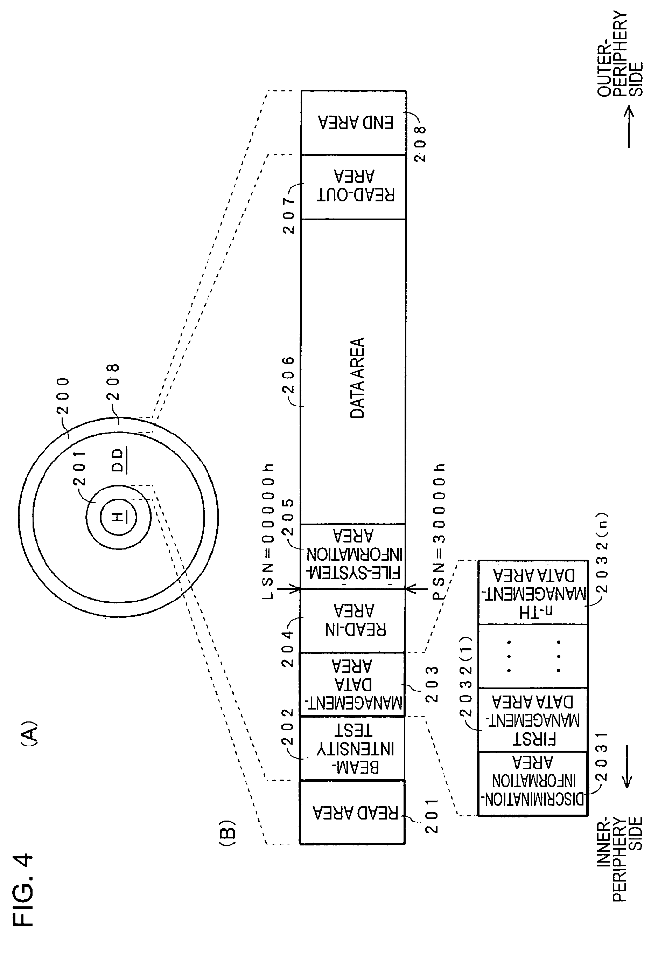

Next, the DVD-R will be described. Fig. 4 is provided for illustrating the physical format of the DVD-R. As shown in Fig. 4(A), a DVD-R 200 has a center hall H at the center thereof, so as to be fixed to a spindle motor of a reproducer and/or a recorder, and has a read area 201, a recordable area DD, and an end area 208 in that order from the inner-periphery side.

As shown in Fig. 4(B), the recordable area DD has a light-intensity-test area 202, a management-data area 203, a read-in area 204, a file-system-information area 205, a data area 206, a read-out area 207, and the end area 208 that are provided in that order from the inner-periphery side, as shown in Fig. 4(B).

Then, where the DVD-R 200 is used, the read area 201 also stores information about the medium, such as a type-discrimination code indicating the medium type. Further, the light-intensity-test area 202 stores test information, where a test for setting the intensity of laser light (laser light) used for recording is conducted. The management-data area 203 stores data on the intensity of the set laser light and information that becomes required, so as to be held during the recording process.

Further, the read-in area 204 stores, for example, start information that is read at the time where reproduction of the record information recorded onto the DVD-R 200 is started during information is recorded. Further, the file-system-information area 205 stores information indicating the file configuration of the record information.

Further, the data area 206 stores actual record information including image data, speech data, and so forth. The read-out area 207 stores termination information that is read at the time where reproduction of recorded information is terminated during record information including image data, speech data, and so forth is recorded.

Further, where the DVD-R 200 is used, it becomes also possible to discriminate between the red-laser DVD-R and the blue-laser DVD-R, based on a type-discrimination code stored in the read area 201 of an area that starts backward from the logical sector number (LSN) = 00000h and the physical sector number (PSN) = 30000h, as is the case with the DVD-ROM 100 that is described above with reference to Fig. 3.

Further, it becomes possible to determine whether or not the disk is a DVD-R according to the discrimination information stored in the discrimination-information area 2031 of the management-data area 203, and discriminate between a DVD-ROM and other disks based on the level of light reflected from the management-data area 203.

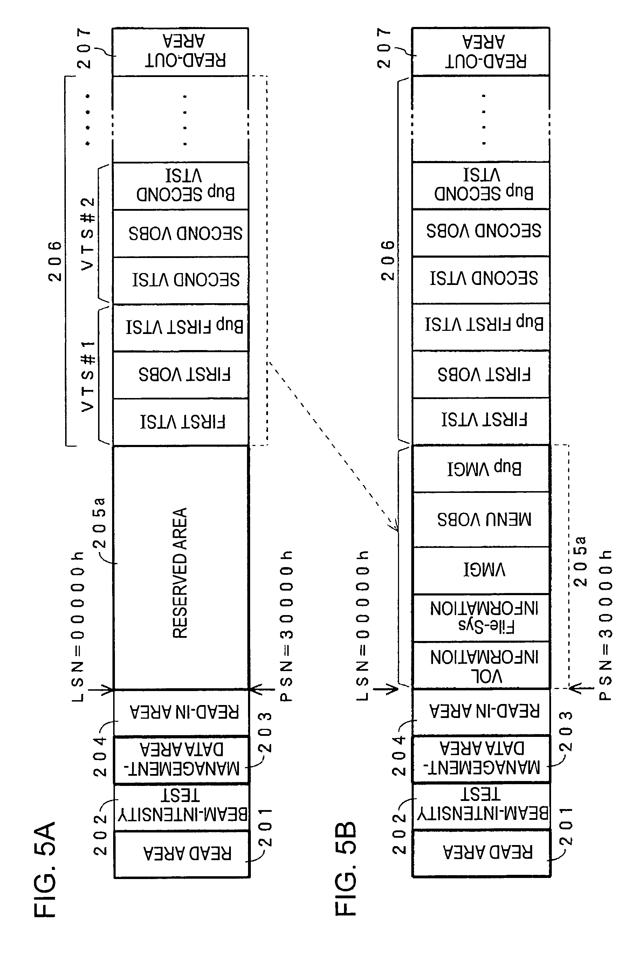

Further, where the DVD-R is used, it is considered that information is often stored in the DVD-video format that requires the above-described finalization. Therefore, it is determined whether or not the DVD-R is subjected to the finalization. Figs. 5A and 5B illustrate the case where video data and speech data are stored in the DVD-video format in the DVD-R. Fig. 5A shows the state where the finalization is not yet performed and Fig. 5B shows the state after the finalization is performed.

Where data is recorded in the DVD-video format in the DVD-R, a reserved area 205a which is an unrecorded area adapted to store information including volume information, file-system information, VMG information, and so forth is provided in advance by the finalization. As has been described with reference to Fig. 4, the read area 201, the light-intensity-test area 202, the management-data area 203, and the read-in area 204 are provided on the inner-periphery side with respect to the reserved area 205a, where the areas cannot be directly read by the information-processing unit 1 and can be used only by a firmware of the DVD drive 2.

Then, where information is recorded, the data area 206 stores VTS#1, VTS#2, ..., namely, groups of video data and speech data for each title, as is the case with the DVD-ROM 100 that is described above with reference to Fig. 3, and necessary information is stored in the management-data area 203, the read-in area 204, and the read-out area 207.

Thus, where the data recording is finished and the DVD-R is removed from the recording device according to an instruction transmitted from the user, for example, the finalization is performed. Then, as shown in Figs. 5A and 5B, volume information, file-system information, VMGI, a menu VOBS, and backup VMGI that are information stored in the reserved area 205a are generated in the DVD drive 2 based on the VTS#1, the VTS#2, ..., that is, the data stored in the data area 206. The above-described information is stored in the reserved area 205a of the DVD-R.

By performing the finalization, the volume information, the file-system information, and the VMG information including the VMGI, the menu VOBS, and the backup VMGI are stored in an area between the read-in area and the data area, as is the case with the physical format of the DVD-ROM shown in Fig. 3, so that the DVD can be reproduced by a DVD-ROM drive other than the recorder that was used for the recording, as a DVD-ROM-compatible disk.

Subsequently, as shown in Fig. 4, it becomes possible to determine whether or not the finalization is performed according to whether or not data is stored in the reserved area 205a provided between the read-in area 204 and the data area 206. In that case, there is no need to confirm all of the volume information, the file-system information, the VMGI, the menu VOBS, and the backup VMGI that should be stored in the reserved area 205a. For example, it is possible to determine whether or not the finalization was performed by detecting whether or not the file-system information and/or the VMGI information exist.

Further, for example, where information is recorded onto the DVD-R in the DVD-video format, Temp VMGI (provisional VMGI) which is information used for generating information such as the VMG information that is generated during the finalization is generated based on record information during the information is recorded, so as to perform the finalization correctly in a short time period, for example. Then, the generated Temp VMGI may be stored in the data area. Thus, where the Temp VMGI is used in the above-described manner, the type of disk or the like can also be determined in the above-described manner.

### [DVD-RW]

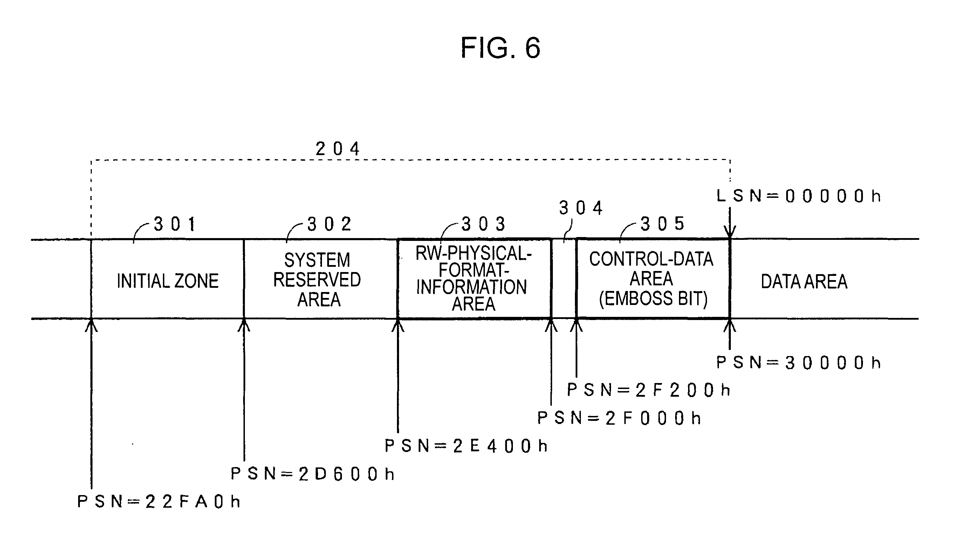

Next, the DVD-RW will be described. Fig. 6 is provided for illustrating the physical configuration of a read-in area of the DVD-RW. The external view and physical format of the DVD-RW are roughly the same as those of the DVD-R shown in Fig. 4.

That is to say, the DVD-RW also has the read area 201, the light-intensity-test area 202, the management-data area 203, the read-in area 204, the file-system-information area 205, the data area 206, the read-out area 207, and the end area 208 that are provided on the disk in that order from the inner-periphery side toward the outer-periphery side.

Further, in the DVD-RW, the read-in area 204 has an initial zone 301, a system-reserved area 302, an RW-physical-format-information area 303, a reference zone and a buffer zone 304, and a control-data area 305 in which an emboss bit is stored, as shown in Fig. 6.

Further, the RW-physical-format-information area 303 stores, for example, various information about the type of a DVD standard (DVD-ROM, DVD-RAM, DVD-RW, and so forth) to be used, the part version, the disk size, the maximum read rate, the disk structure (a single-layer ROM/RAM disk and a double-layer ROM/RAM disk), the recording density, the read power, the peak power, the bias power, and the medium manufacturing.

Further, the physical-format information including the DVD-standard type (book type), the number of layers of the disk, and so forth and various information about the medium manufacturing are emboss-recorded in the control-data area.

By reading the information in the RW-physical-format-information area and the emboss-recorded information in the control-data area, it becomes possible to determine whether the disk is the red-laser DVD-RW or the blue-laser DVD-RW with reliability and precision.

### [DVD using Burst cutting for Medium-discrimination information]

Next, a DVD that has a burst-cutting area on the innermost-periphery side of the disk so that medium-discrimination information is recorded on the burst-cutting area by burst cutting (hereinafter referred to as a DVD having a burst-cutting area) will be described. A DVD 400 having the burst-cutting area can be used for any one of a DVD-ROM, a DVD-R, and a DVD-RW.

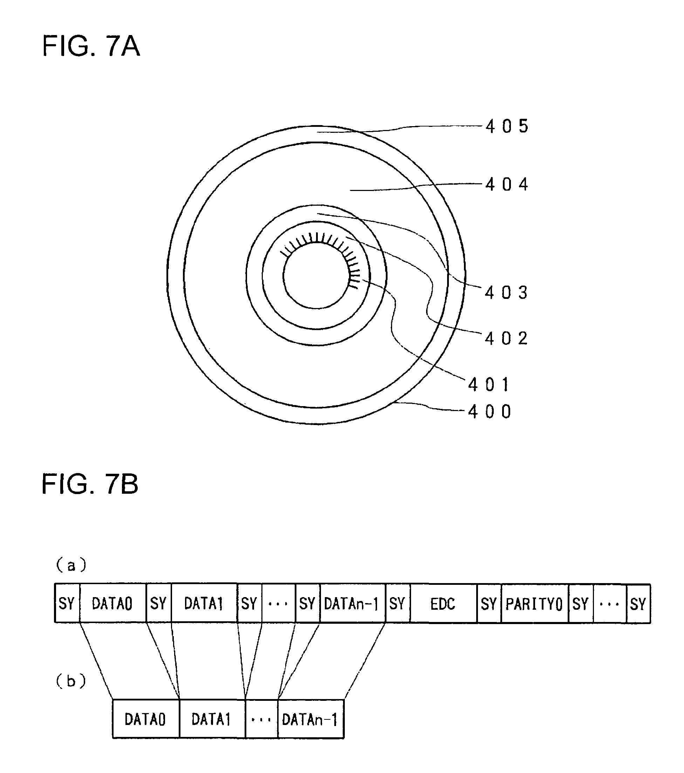

Figs. 7A and 7B are provided for illustrating the DVD 400 including the burst-cutting area. As shown in Fig. 7A, the DVD 400 having the burst-cutting area has a burst-cutting area 401 in the innermost-periphery part of the disk. As shown in Fig. 7A, read-in areas (a reproduce-only area 402 and a record-only area 403), a user-data area 404, and a read-out area 405 are provided outside the burst-cutting area 401.

Then, a reflection layer of the DVD 400 is irradiated with pulse-like high-power laser lights via a focus lens so that part of the reflection layer, the part being irradiated with the high-power laser lights, is removed. Subsequently, stripe-like data subjected to Phase encoding modulation is stored in the burst-cutting area, for example.

Where the data is reproduced, the burst-cutting area is irradiated with a laser light used for reading. Since the amount of reflected light at the part from which the reflection layer is removed reduces, the fluctuation of the reflected-light amount is detected and binarized. Subsequently, Phase encoding modulation is performed so that the data can be read.

Thus, the type-discrimination code used for identifying the disk type or the like is stored in the burst-cutting area by the burst cutting so that the data in the burst-cutting area is read. Subsequently, it becomes possible to obtain the type-discrimination code, determine the type of the disk, namely, to which of the DVD-ROM, the DVD-R, and the DVD-RW does the disk corresponds, and determine whether the disk is for a red laser or a blue laser.

Further, as shown in Fig. 7B(a), data indicated by specifiers DATA0, DATA1, ... is stored in the burst-cutting area 401 by synchronization codes indicated by specifiers SY. Further, an error-detection code indicated by the specifier EDC and an error-correction code indicated by the specifier PARITY0 are added and recorded, so as to maintain the read rate at a suitable level.

Then, where the data is reproduced, the synchronization codes are removed, as shown in Fig. 7B(b), and data (DATA0, DATA 1, ... whose errors are corrected by the error-detection code and the error-correction code are extracted and used.

### [Brief Description of the Disk-type determination]

As described above, in the case of any one of the DVD-ROM, the DVR-R, the DVD-RW, it becomes possible to determine the disk type, for example, whether the disk is the red-laser disk or the blue-laser disk based on the information stored in the read area which falls within an area starting backward from the logical-sector number = 00000h, the management-data area and/or the RW-physical-format-information area, and the control-data area and/or the burst-cutting area. Subsequently, it becomes possible to notify the user of the determined disk type via the color LCD 12 or the like.

Further, the DVD drive 2 can detect the recorded capacity by tracking the recorded data and/or based on predetermined record information of an inserted DVD disk, for example. Further, the total storage capacity of the inserted DVD can be correctly determined based on information stored in a predetermined area of the DVD. Therefore, the free capacity of the inserted disk can be calculated by subtracting the recorded capacity obtained in the above-described manner from the total storage capacity. Subsequently, it becomes possible to notify the user of the free capacity via the color LCD 12 or the like.

Further, where data is stored onto a DVD in the DVD-video format, it becomes possible to correctly detect whether or not finalization was performed. Subsequently, it becomes possible to inform the user whether or not the finalization is performed.

### [Notification about the Disk type]

In the DVD-digital video camera of the embodiment, either a red laser or a blue laser can be used, as the laser-light source. Therefore, the user is clearly informed that whether a DVD to be used is for the red laser or the blue laser.

The DVD-digital video camera of the embodiment has the color LCD 12 including color filters of three primary colors including red (R), green (G), and blue (B), and illuminators of three primary colors including red (R), green (G), and blue (B). Therefore, the DVD-digital video camera can represent a long-wavelength region (wavelength: 600 nm to 780 nm, a red light with an orange tint, a red tint, and so forth), a medium-wavelength region (wavelength: 500 nm to 600 nm, a green light with a green tint, a yellow tint, and so forth), and a short-wavelength region (wavelength: 380 nm to 500 nm, a blue light with a violet tint, an indigo-blue tint, a blue tint, and so forth).

Then, in the case where the red-laser DVD is used, the notification is performed by displaying the color of the red light in the long-wavelength region. Further, in the case where the blue-laser DVD is used, the notification is performed by displaying the color of the blue light in the short-wavelength region. That is to say, instead of simply displaying the red color or the blue color, the color of the long-wavelength region and/or that of the short-wavelength region is displayed. Subsequently, it becomes possible for the user to visually determine whether the DVD inserted into the DVD-digital video camera of the embodiment is for the red laser or the blue laser with speed and precision.

Of course, the user can effortlessly and correctly identify not only the type of laser light to be used, but also the free-capacity display and whether or not the finalization was performed without thinking through as simple a display image as possible.

Figs. 8A and 8B, and Figs. 8C to 10A, and Figs. 10B and 10C are provided for illustrating example display images of the disk types, the free capacities, and whether or not the finalization is performed. As shown in Fig. 8A, a medium-information-display area G is provided, for example, at an upper-right part of the color LCD 12 so that a capacity display G1 in the form of a circle graph showing the recorded capacity and free capacity of a DVD to be used, a finalization-finished display G2, a recordable-time display G3, and a non-finalization display G4 are displayed in the medium-information-display area G.

In that case, as shown in Fig. 8B, where the DVD to be used is determined to be a red-laser DVD, the recorded-capacity display G11R corresponding to the recorded capacity is indicated in a dark red color and the free-capacity display G12R corresponding to the free capacity is indicated in a light red color. Further, by displaying the recordable-time display G3 according to the free capacity, the user is clearly informed that how much data can further be recorded.

Further, where the DVD to be used is a DVD-R, it is determined that the data is recorded in the DVD-video format. If the data had already been finalized, the finalization-finished display G2 is displayed so that the capacity display G1 and the recordable-time display G3 are separated, as shown in Fig. 8A, which indicates that the finalization is finished.

Further, where the DVD to be used is a DVD-R and the finalization is not yet finished, the non-finalization display G4 is displayed on the left side of the capacity display G1, as shown in Fig. 8C, which informs the user that the finalization has not yet been performed.

Further, where the DVD to be used is a DVD-ROM, the finalization is not performed, since data cannot be recorded thereon. Further, if the DVD to be used is a DVD-RW, the DVD-video-recording format is often used and the finalization is not needed. Subsequently, the capacity display G1 and the recordable-time display G3 are displayed, as shown in Fig. 8B. As a time period during which the recordable time is displayed, for example, a value obtained by roughly calculating a remaining recordable time, shown as (remaining data amount ÷ average bit rate in a selected compression mode), can be used.

Further, where the DVD-ROM is used, data cannot be additionally recorded thereon. Therefore, the capacity display G1 is presented, as play-chapter display including the played-capacity display and remaining-play capacity, and the recordable-time display G3 is presented, as remaining-play-time display.

Further, the recording-capacity display G11R and the free-capacity display G12R are presented, as values obtained by rounding values that are obtained, shown as (recorded capacity ÷ total storage capacity) and (free capacity ÷ total storage capacity), by 10%.

The above-described description applies to the case where the blue-laser DVD is used except that the color used for the recorded-capacity display and the free-capacity display is blue in place of red. That is to say, where the DVD to be used is the blue-laser DVD-RW, the part corresponding to a recorded-capacity-display G11B of the capacity display G1 in the form of the circle graph is represented in dark blue and the part corresponding to a free-capacity display G12B is represented in light blue, as shown in Fig. 9A. Further, the recordable-time display G3 is also displayed.

Further, where the DVD to be used is the blue-laser DVD-R and has already been finalized, the finalization-finished display G2 is displayed in addition to the capacity display G1 in the circle-graph form and the recordable-time display G3, as shown in Fig. 9B. Further, where the DVD to be used is the blue-laser DVD-R and has not yet been finalized, the non-finalization display G4 is displayed in addition to the capacity display G1 in the circle-graph form and the recordable-time display G3, as shown in Fig. 9C.

Further, where the DVD-ROM is used, data cannot be additionally recorded thereon. Therefore, the play-chapter display including the played-capacity display and the remaining-play capacity is presented in blue color, as the capacity display G1. Further, the recordable-time display G3 is displayed, as the remaining-play-time display.

Further, even though the capacity display G1 is displayed in the circle-graph form, as shown in Figs. 8A, 8B, and 8C and Figs. 9A, 9B, and 9C, the capacity display G1 may be displayed without being limited thereto. For example, the capacity display may be presented in the form of a bar graph, as shown in Figs. 10A, 10B, and 10C. Namely, a medium-information-notification area GG is provided at an lower-right part of a display screen of the color LCD 12 so that a capacity display GG1 and a recordable-time display GG2 are displayed therein, as shown in Fig. 10A.

The capacity display GG1 includes a recorded-capacity display GG1 and a free-capacity display GG12, as shown in Figs. 10B and 10C. Where the red-laser DVD is used, the part corresponding to the recorded-capacity display GG1 is displayed in a dark-red color and the part corresponding to the free-capacity display GG12 is displayed in a light-red color. Further, where the blue-laser DVD is used, the part corresponding to the recorded-capacity display GG1 is displayed in a dark-blue color and the part corresponding to the free-capacity display GG12 is displayed in a light-blue color.

Further, where the DVD to be used is the DVD-R and has already been finalized, a finalization-finished display GG3 is displayed, as shown in Fig. 10B. Further, where the DVD to be used is the DVD-R and has not yet been finalized, a non-finalization display GG4 is displayed, as shown in Fig. 10C.

That is to say, in the case of Figs. 10A, 10B, and 10C, the user is informed of information about the medium, as is the case with Figs. 8A, 8B, and 8C, and Figs. 9A, 9B, and 9C except that the capacity-display part is presented, as the bar graph in place of the circle graph.

Further, the recorded-area display is presented in dark red and/or dark blue and the free-area display is presented in light red and/or light blue on the grounds that where the free-area display is represented in monochrome, for example, and where the DVD has not yet been used, the user cannot be informed whether the DVD is for a red laser or a blue laser. Therefore, the light red and the light blue have predetermined darkness so that the user can determine them to be red and blue.

Further, part of each of the capacity display G1 and the capacity display GG1 that are shown in Figs. 8A, 8B, and 8C, and Figs. 9A, 9B, and 9C, such as the center part thereof may be color-coded according to whether the DVD is for the red laser or the blue laser, or according to whether a DVD using the background of the medium-information notification area is for the red laser or the blue laser.

Further, where the red-laser DVD is used, characters "Red", "a kanji representing red", "R", and so forth are displayed, and where the blue-laser DVD is used, characters "Blue", "a kanji representing blue", "B", and so forth are displayed, as notification for the user.

Further, color display may be presented at any part of the color LCD 12 according to whether the DVD to be used is for the red laser or the blue laser. For example, a rim part of the display area of the color LCD 12 may be rimmed according to whether the DVD to be used is for the red laser or the blue laser.

That is to say, as shown in Figs. 8A, 8B, and 8C, Figs. 9A, 9B, and 9C, and Figs. 10A, 10B, and 10C, it becomes possible to clearly notify the user whether the DVD to be used is for the red laser or the blue laser by changing the color of a drawing and/or a picture, or by showing characters and/or symbols. Of course, the characters and/or the symbols may be displayed in different colors according to whether the DVD is for the red laser or the blue laser.

Further, if the drawing, the picture, the characters, and the symbols are presented in colors, a color having the same wavelength as that of a laser light to be used may be used. However, where the DVD to be used is the red-laser DVD, for example, the long-wavelength region (wavelength: 600 nm to 780 nm, a red light with an orange tint, a red tint, and so forth) is used. Where the DVD to be used is the red-laser DVD, the short-wavelength region (wavelength: 380 nm to 500 nm, a blue light with a violet tint, an indigo-blue tint, a blue tint, and so forth) is used. That is to say, a color by which the user can determine whether the DVD to be used is for the red laser or the blue laser at a glance is used.

Further, the medium-information-display area can be provided at a predetermined position on the display screen of the color LCD 12 without being limited to the above-described embodiment. Further, the display images of the capacity displays G1 and GG1, and the recordable-time displays G3 and GG2 are displayed or not according to the user. That is to say, the user can display the capacity displays G1 and GG1, and the recordable-time displays G3 and GG2, as required.

As has been described, the DVD-digital video camera of the embodiment determines to which of the DVD-ROM, the DVD-R, and the DVD-RW does the DVD inserted therein corresponds and determines whether the DVD is for a red laser or a blue laser with speed and precision. Further, the DVD-digital video camera determines the free capacity and whether or not the finalization is performed with precision, so as to plainly inform the user of the above-described information.

### [Specific Operations of DVD-digital video camera]

Then, as has been described, processing performed by the DVD-digital video camera of the embodiment for notifying the user of disk information (medium information) will be described with reference to flowcharts of Figs. 11 and 12, and Fig. 13. The flowchart of Fig. 11 is provided for illustrating medium-information notification that is performed, where a DVD is inserted into the DVD-digital video camera of the embodiment.

As has been described, in the DVD-digital video camera of the embodiment, the information-processing unit 1 and the DVD drive 2 are connected to each other via an ATAPI interface having the Mt. Fuji-multimedia command set mounted thereon. Therefore, where the DVD is inserted, the drive-control unit 16 of the information-processing unit 1 generates the Test Unit Ready (00h) command and determines whether or not a medium is chucked into the drive by Request Sense and rotation of the spindle motor is started.

Where the information-processing unit 1 confirms that the inserted DVD is chucked and the rotation is started and after a series of drive-setting commands are issued, the drive-control unit 16 issues a Read DVD Structure (command code ADh) packet command and transmits an instruction to read data in the area starting backward from the logical-sector number = 00000h. In the DVD drive 2, the firmware-control unit 21 of the drive reads data of the area starting backward from the logical-sector number = 00000h by controlling the optical-head unit 27 and the disk-detection unit 28 (step S1), and performs the series of medium-type determination processing based on the read data (step S2).

Then, the system-control unit 18 of the information-processing unit 1 switches the processing mode based on the result of the disk-type determination performed at step S2 by the DVD drive 2 (step S3).

Hereinafter, the processing performed at step S3 will be specifically described. Where the disk-type determination performed at step S2 by the DVD drive 2 is terminated, the packet-device-information unit 23 generates a packet-command-response data page based on the determination result and transmits the data page back to the system-control unit 18 of the information-processing unit 1 via the host-I/F unit 22.

In that case, the packet-device-information unit 23 generates the response data page according to a Table 297-READ DVD STRUCTURE Data Format defined by the above-described Mt. Fuji-multimedia command set, for example. Therefore, the system-control unit 18 of the information-processing unit 1 refers to the generated data page via the drive-control unit 16.

That is to say, the system-control unit 18 of the information-processing unit 1 which is a host system refers to, for example, the Table 297-READ DVD STRUCTURE Data Format (With Format Field = 00h) defined by the above-described Mt. Fuji-multimedia command set via the drive-control unit 16, where the format is held in the packet-device-information unit 23, reads Book Type that is a field of a first byte string of response data of the DVD read-in structure starting from the fifth byte on the beginning side, and obtains the result of medium-type determination performed for the DVD disk.

Here, the book type value 0000b (hereinafter, b denotes binary numbers) denotes a DVD-ROM, the value 0001b denotes a DVD-RAM, the value 0010b denotes a DVD-R, the value 0011b denotes a DVD-RW, and the value 1001b denotes a DVD + RW. Although the other field values are currently reserved, a single value of Reserved of the Others type indicates a DVD blue disk, so that not only the red-laser disk, but also the blue-laser disk can be handled.

Then, where the medium-type determination result obtained at step S3 indicates the red-laser DVD-ROM, the system-control unit 18 of the information-processing unit 1 obtains the total disk capacity from the DVD drive 2, as the sector number, via an API (Application Program Interface) of a UDF bridge file system in the DVD-video format (DVF) (step S4).

Hereinafter, as has been described with reference to Figs. 8A, 8B, and 8C, and/or Figs. 10A, 10B, and 10C, the play-chapter display and the remaining play-time display are performed by the graphic display of the red wavelength region (step S5), since the DVD-ROM is a read-only disk, the entire data is recorded thereon, and play reproduction always starts from the logical sector number = 00000h.

Further, where the medium-type determination result obtained at step S3 indicates the red-laser DVD-R, the system-control unit 18 of the information-processing unit 1 obtains the total disk-capacity information, the free-capacity information (remaining recordable-capacity information) from the DVD drive 2 via the API of the UDF bridge file system in the DVD-video format (DVF), and information about whether or not the finalization is performed (step S6).

Then, after the processing at step S6 is performed, the remaining amount is displayed, as the total remaining amount by the graphic display of the red-wavelength region, and the finalization-finished display and/or the non-finalization display is performed (step S7), as has been described with reference to Figs. 8A, 8B, and 8C, and Figs. 10A, 10B, and 10C.

Further, where the medium-type determination result obtained at step S3 indicates the red-laser DVD-RW, the system-control unit 18 of the information-processing unit 1 obtains the total disk-capacity information and the free-capacity information (remaining recordable-capacity information) from the DVD drive 2 via the API of the UDF bridge file system in the DVD-video recording format (DVRF) (step S8).

Further, where the disk is determined to be a red-laser-capable DVD-RW medium, two types of recording formats can be used. Namely, the DVD-video format and the DVD-video recording format can be used.

Where the DVD-RW is used, editing or the like is often performed, since the DVD-RW is rewritable. Therefore, according to this embodiment, where the DVD-RW is determined to be a red-laser DVD-RW, the recording format thereof is determined to be the DVD-video recording format.

Then, after the processing at step S8 is performed, the remaining amount is displayed, as the total remaining amount by the graphic display of the red-wavelength region (step S9), as has been described with reference to Figs. 8A, 8B, and 8C, and Figs. 10A, 10B, and 10C.

Further, for making the DVD-ROM drive capable of reproducing the DVD-RW, the DVD-video format is used, as the record format, so as to secure DVD-ROM downward compatibility, and the finalization is performed.

Therefore, by determining the recording-format type based on information recorded onto the inserted disk, at step S3, it is determined whether the data is recorded in the DVD-video format or the DVD-video recording format by the processing performed at step S8 by the information-processing unit 1.

Further, where the data is recorded in the DVD-video format, information about whether or not the finalization is performed is obtained, at step S8, and the information about the disk is displayed, at step S9, as shown in Figs. 8A and 8C, and Figs. 10B and 10C. Further, the finalization-finished display or the non-finalization display may be performed.

Further, where the medium-type determination result obtained at step S3 indicates the blue-laser DVD-ROM (DVD-B-ROM), the system-control unit 18 of the information-processing unit 1 obtains the total disk capacity from the DVD drive 2, as the sector number, via the API (Application Program Interface) of the UDF bridge file system in the DVD-video format (DVF) (step S10).

Hereinafter, as has been described with reference to Figs. 9A, 9B, and 9C, and/or Figs. 10A, 10B, and 10C, the play-chapter display and the remaining play-time display are performed by the graphic display of the blue-wavelength region (step S11), since the DVD-ROM is a read-only disk, the entire data is recorded thereon, and playing reproduction is always started from the logical sector number = 00000h, as has been described in the description of step S4.

Further, where the medium-type determination result obtained at step S3 indicates the blue-laser DVD-R (DVD-B-R), the system-control unit 18 of the information-processing unit 1 obtains the total disk-capacity information and the free-capacity information (remaining recordable-capacity information) from the DVD drive 2 via the API of the UDF bridge file system in the DVD-video format (DVF), and information about whether or not the finalization is performed (step S12).

Then, after the processing at step S6 is performed, as has been described with reference to Figs. 8A, 8B, and 8C, and Figs. 10A, 10B, and 10C, the remaining amount is displayed, as the total remaining amount by the graphic display of the blue-wavelength region, and the finalization-finished display and/or the non-finalization display is performed (step S13).

Further, where the medium-type determination result obtained at step S3 indicates the blue-laser DVD-RW (DVD-B-RW), the system-control unit 18 of the information-processing unit 1 obtains the total disk-capacity information and the free-capacity information (remaining recordable-capacity information) from the DVD drive 2 via the API of the UDF bridge file system in the DVD-video recording format (DVRF) (step S14).

Further, where the disk is determined to be a blue-laser-capable DVD-RW medium, the DVD-video format and the DVD-video recording format can be used, as is the case with the above-described disk determined to be the red-laser-capable DVD-RW medium.

Where the DVD-RW is used, editing or the like is often performed, since the DVD-RW is rewritable. Therefore, according to this embodiment, where the DVD-RW is determined to be the blue-laser DVD-RW, the recording format thereof is determined to be the DVD-video recording format.

Then, after the processing at step S14 is performed, the remaining amount is displayed, as the total remaining amount by the graphic display of the blue-wavelength region (step S15), as has been described with reference to Figs. 9A, 9B, and 9C, and Figs. 10A, 10B, and 10C.

Further, where the drive that can reproduce the blue-laser DVD-ROM reproduces the blue-laser DVD-RW, the DVD-video format is used, as the record format, so as to secure the DVD-ROM downward compatibility. Finally, the finalization is performed.

Therefore, by determining the recording-format type based on the information recorded onto the inserted disk, at step S3, it is determined whether the data is recorded in the DVD-video format or the DVD-video recording format through the processing performed at step S14 by the information-processing unit 1.

Further, where the data is recorded in the DVD-video format, information about whether or not the finalization is performed is obtained, at step S14, and the information about the disk is displayed, as shown in Figs. 9B and 9C, and Figs. 10B and 10C, at step S15. Further, the finalization-finished display or the non-finalization display may be performed.

Further, where the blue-laser DVD-B-RW is used, an AV-data file system designed specifically for a DVD-Blue-RAM disk that is customized for an MPEG-TS recorder of a BS-digital-broadcast receiver, where the AV-data-file system uses Play List in Clips, can be used in place of the DVD-video recording format that is seamlessly connected to a PC and widely available. Further, it is possible to identify the AV-data file system and inform the user of the fact.

Further, after the information display is performed at each of steps S5, S7, S9, S11, S13, and S15, the processing shown in Fig. 11 is finished. Further, the information display at each of steps S5, S7, S9, S11, S13, and S15 can be automatically terminated after a predetermined time period, or terminated according to an instruction transmitted from the user.

Further, the processing for informing the user of the disk information shown in Fig. 11 may be automatically performed not only in the case where the disk is inserted, but also in the case where the power of the DVD-digital video camera is turned on and a predetermined DVD is inserted thereto in advance, for example. Of course, the processing may be performed automatically at other appropriate times.

Further, it becomes possible to notify the user of the disk information shown in Fig. 11 at the appropriate time where an instruction to notify the user of the disk information is transmitted via the user-I/F unit 20.

Further, at steps S1 and S2, a red laser is emitted and the medium type is determined based on the result of a read discrimination code. Here, if a blue laser is emitted, it is possible to determine that the disk is an ROM due to the fact that a read-only disk has a high reflectivity.

Further, for determining whether the disk is the blue-laser-capable disk or the red-laser-capable disk, a read-only part on the read-in inner-periphery side of the medium may be formed, as an emboss-reflection layer, so as to increase the light reflectivity thereof. Subsequently, the medium type is determined according to the result of a read discrimination code.

Otherwise, since the reflection-signal level of the recording layer of a read part of each of the R disk and the RW disk is lower than that of the ROM disk by as much as a several tens of %, a management-data area of a recordable medium-reflection film part on the read-in periphery side may be read by a red laser, so that the medium type may be determined according to a read-signal-level detection signal.

Further, where the medium is a ROM disk and the discrimination code does not indicate a red-laser disk, or where the reflection-signal level of the medium-reflection-film part indicates that data cannot be read by the red laser and the data can be read by switching to a blue laser, it is possible to determine that the ROM disk is the blue-laser disk.

Further, in the case where discrimination between the DVD-RW and a DVD-R for General Ver. 2.0 is practiced, medium-type determination processing for determining whether the disk is an RW medium or other disks is performed. That is to say, by reading information data written in the RW-physical format information area starting backward from a physical-sector number = 2F000h that can be read under the control of the firmware-controlling unit 21, or an emboss-bit control-data zone from a physical-sector number = 2F200h to PSN = 2FE00h, the disk is determined to be the RW medium.

### [Disk-type determination processing]

Next, the disk-type determination processing performed at step S2 shown in Fig. 11 will be described in detail. Fig. 12 is a flowchart illustrating the disk-type determination processing performed at step S2 shown in Fig. 11.

As has been described, the DVD drive 2 receives a Read-DVD-Structure (command code ADh) packet command transmitted from the information-processing unit 1 and reads data that starts backward from the logical-sector number = 00000h (firmware data that includes a read-in area and that is recorded on the inner-periphery side with respect to the read-in area). Then, the firmware-control unit 21 of the DVD drive 2 starts the disk-type determination processing shown in Fig. 12 based on the read data.

First, the firmware-control unit 21 determines whether or not the inserted DVD is a DVD-ROM based on data read from the inserted DVD, namely, data read from the read area, the management-data area, the read-in area, or the burst-cutting area (step S21) and determines whether or not the DVD is a red-laser DVD (step S22), and determines whether or not the DVD is a DVD-RW (step S23).

Where the inserted DVD is determined to be a DVD-ROM by the determination processing performed at step S21, data indicating that the determination result is "true" is stored in an area (determination result 1) adapted to store the determination result obtained at step S21 (step S24). Further, where the inserted DVD is not determined to be the DVD-ROM by the determination processing performed at step S21, data indicating that the determination result is "false" is stored in the area (determination result 1) adapted to store the determination result obtained at step S21 (step S25).

Further, where the inserted DVD is determined to be a red-laser DVD by the determination processing performed at step S22, data indicating that the determination result is "true" is stored in an area (determination result 2) adapted to store the determination result obtained at step S22 (step S26). Further, where the inserted DVD is not determined to be the red-laser DVD by the determination processing performed at step S22, data indicating that the determination result is "false" is stored in the area (determination result 2) adapted to store the determination result obtained at step S22 (step S27).

Likewise, where the inserted DVD is determined to be a DVD-RW by the determination processing performed at step S23, data indicating that the determination result is "false" is stored in an area (determination result 3) adapted to store the determination result obtained at step S23 (step S28). Further, where the inserted DVD is not determined to be the DVD-RW by the determination processing performed at step S23, data indicating that the determination result is "false" is stored in the area (determination result 3) adapted to store the determination result obtained at step S23 (step S29).

Thus, the determination result 1 (information about whether or not the DVD is the DVD-ROM), the determination result 2 (information about whether or not the DVD is the red-laser DVD), the determination result 2 (information about whether or not the DVD is the DVD-RW) are obtained and the disk type is determined based on the above-described three types of information (step S30). More specifically, the processing at step S30 is performed based on a disk-type-determination table shown in Fig. 13.

Namely, where the determination result 1 is "true" and the determination result 2 is "true, as shown in column (1) of Fig. 13, the DVD is determined to be a red-laser DVD-ROM. In that case, processing is started from step S4 shown in Fig. 11. Further, where the determination result 1 indicates "false", the determination result 2 indicates "true", and the determination result 3 indicates "false", as shown in column (2), the DVD is neither the DVD-ROM nor the DVD-RW. Therefore, the DVD is determined to be the red-laser DVD-R. In that case, the processing is started from step S6 shown in Fig. 11. Further, where the determination result 1 indicates "false", the determination result 2 indicates "true", and the determination result 3 indicates "true", as shown in column (3), the DVD is determined to be a red-laser DVD-RW. In that case, the processing is started from step S8 shown in Fig. 11.

Likewise, where the determination result 1 is "true" and the determination result 2 is "false", as shown in column (4) of Fig. 13, the DVD is determined to be a blue-laser DVD-ROM. In that case, the processing is started from step S10 shown in Fig. 11. Further, where the determination result 1 indicates "false", the determination result 2 indicates "false", and the determination result 3 indicates "false", as shown in column (5), the DVD is neither the DVD-ROM nor the DVD-RW. Therefore, the DVD is determined to be the blue-laser DVD-R. In that case, the processing is started from step S12 shown in Fig. 11. Further, where the determination result 1 indicates "false", the determination result 2 indicates "false", and the determination result 3 indicates "true", as shown in column (6), the DVD is determined to be the blue-laser DVD-RW. In that case, the processing is started from step S14 shown in Fig. 11.

Further, the specifier - shown in Fig. 13 needs not to be determined and denotes Don't Care.

Further, the processing at step S2 shown in Fig. 11 (a disk-type-determination-processing task on the DVD-drive 2's part) and the processing from step S3 on down (a graphic-display-processing task on the information-processing unit 1's part) are illustrated, as shown in Fig. 14.

At step S2 shown in Fig. 11, the firmware-control unit 21 of the DVD drive 2 performs a series of processing shown in Fig. 14(A). First, the DVD drive 2 determines whether the inserted DVD is a DVD-ROM, a DVD-R, or a DVD-R (step S101), determines whether the inserted DVD is for a red laser (Red) or a blue laser (Blue) (step S102), determines whether or not a file system used for the inserted DVD is in the DVD-video format (step S103), and performs file-system selection and free-area detection (step S104).

The above-described results are transmitted, as one of the bit patterns of messages. In that case, each of the bit patterns is a bit pattern used for inter-task transmission from a medium-type-determination-processing task to a graphic-display task and transmitted, as a message.

Further, the system-control unit 18 of the information-processing unit 1 performs capacity display such as remaining-amount display based on information transmitted from the DVD drive 2, as shown in Fig. 14(B) (step S201), controls a display color used for the capacity display (step S202), displays whether or not the finalization is performed (step S203), and displays time information about a recordable time, a remaining-play time, and so forth (step S204).

Thus, according to the DVD-digital video camera of the embodiment, the information-processing unit 1 and the DVD rive 2 operate in concert with each other, so as to clearly notify the user that whether the DVD to be used is the red-laser DVD or the blue-laser DVD, the free capacity of the DVD, and whether or not the finalization is performed.

Further, according to the DVD-digital video camera of the embodiment, the DVD drive 2 performs the processing shown in Fig. 12 according to a request transmitted from the information-processing unit 1, obtains the determination results 1, 2, and 3, and determines the disk type according to the disk-type determination table shown in Fig. 13. The system-control unit 18 of the information-processing unit 1 obtains the determination result and switches the processing.

However, without being limited to the above-described operations, the DVD drive 2 may perform the processing shown in Fig. 12 and obtain the determination results 1, 2, and 3. Then, the information-processing unit 1 may obtain the determination results and determine the disk type according to the disk-type-determination table shown in Fig. 13.

Although the DVD-digital video camera is described in the above-described embodiment, as an example, various types of recorders and recording/reproduction devices using various types of optical disks including a DVD, a CD, and so forth, as a recording medium, may be used, without being limited to the above-described embodiment.

Further, where the present invention is used for a recorder or a recording/reproduction device that can use a plurality of optical disks in different dimensions, such as a 12-cm optical disk, an 8-cm optical disk, and a smaller disk, that is, optical disks with different storage capacities, it becomes possible to clearly notify the user of the determination information about whether the disk is a red-laser optical disk or a blue-laser optical disk and the free capacity, which reduces erroneous determination of the free capacity.

Further, according to the above-described embodiment, the red laser light with the wavelength of 650 nm and the blue laser light with the wavelength of 405 nm are used. However, without being limited to the above-described embodiment, a laser light with a wavelength of more than 650 nm may be used, even though the laser light is classified as, for example, a so-called red laser light. Further, a laser light with a wavelength of less than 405 nm may be used, even though the laser light is classified, as the blue laser light.

In that case, the color corresponding to a wavelength region to which the wavelength of a laser-light source belongs is displayed for each optical disk so that the difference between laser lights used for writing and/or reading data is indicated. More specifically, for example, where an optical disk adapted to write/read data by using a violet laser light with a wavelength of 400 nm or less is used, where the violet laser light will be usable in future, the user may be informed of the disk type and the free capacity by displaying a color with the wavelength corresponding to the 380-nm-to-500-nm band.

Further, the above-described description applies to the case where a laser light in a medium-wavelength region is used, for example. In the case where an optical disk adapted to write/read data by using the laser light in the medium-wavelength region is used, the user may be informed of the disk type and the free capacity by displaying a color with a wavelength of 500 nm to 600 nm.

### Industrial Applicability

As has been described, the present invention allows clearly notifying a user what wavelength does the laser light of an optical-recording medium to be used have with good visibility. The present invention further allows clearly notifying the user of information about the optical-recording medium with good visibility, such as the free capacity of the optical-recording medium to be used, whether or not the finalization is performed, and so forth.

## Claims

1. Information-recording apparatus comprising:
determination means adapted to determine a wavelength region of a laser light used for writing/reading data on an optical-recording medium based on information acquired from the optical-recording medium;
notification means adapted to notify a user of the wavelength region of the laser light, the wavelength region being determined by the determination means; and
selection means adapted to select the laser light of the wavelength region, the wavelength region being determined by the determination means, to be the laser light used for writing/reading the data.

2. Information-recording apparatus according to Claim 1,
wherein the notification means notifies the user of the wavelength region of the laser light used for writing/reading by displaying a color in the same wavelength region as the wavelength region of the laser light used for writing/reading, the wavelength region being determined by the determination means.

3. Information-recording apparatus according to Claim 1, comprising:
detection means adapted to detect a free capacity of the optical-recording medium which is inserted,
wherein the notification means also notifies the user of the wavelength region of the laser light used for writing/reading by displaying the free capacity detected by the detection means by using at least one of a drawing, a picture, a symbol, and a character by displaying a color in the same wavelength region as the wavelength region of the laser light used for writing/reading, the wavelength region being determined by the determination means.

4. Information-recording apparatus according to Claim 1,
wherein the determination means determines the wavelength region of the laser light used for writing/reading based on a laser light that is applied to the light-recording medium which is inserted and that is reflected from the optical-recording means.

5. An information-recording apparatus according to Claim 1, Claim 2, Claim 3, or Claim 4, the information-recording apparatus comprising:
state-detection means adapted to detect whether or not data is recorded in a format that requires predetermined processing performed for making the optical-recording medium into a read-only optical-recording medium and whether or not the predetermined processing is performed, based on the state of the data recorded onto the inserted optical-recording medium; and
state-notification means adapted to notify the user of a detection result obtained by the state-detection means.

6. A medium-information notification method comprising:
a determination step for determining a wavelength region of a laser light used for writing/reading data on an optical-recording medium based on information acquired from the optical-recording medium;
a selection step for selecting the laser light of the wavelength region, the wavelength region being determined at the determination step, as the laser light used for writing/reading the data; and
a notification step for notifying a user of the wavelength region of the laser light, the wavelength region being determined at the determination step.

7. A medium-information notification method according to Claim 6,
wherein, at the notification step, the user is notified of the wavelength region of the laser light used for writing/reading by displaying a color in the same wavelength region as the wavelength region of the laser light used for writing/reading, the wavelength region being determined at the determination step.

8. A medium-information notification method according to Claim 6, comprising:
a detection step performed for detecting a free capacity of the optical-recording medium which is inserted,
wherein, at the notification step, the user is also notified of the wavelength region of the laser light used for writing/reading by displaying the free capacity detected at the detection step by using at least one of a drawing, a picture, a symbol, and a character by displaying a color in the same wavelength region as the wavelength region of the laser light used for writing/reading, the wavelength region being determined by the determination means.

9. A medium-information notification method according to Claim 6,
wherein, at the determination step, the wavelength region of the laser light used for writing/reading is determined based on a laser light that is applied to the light-recording medium which is inserted and that is reflected from the optical-recording means.

10. A medium-information notification method according to Claim 6, Claim 7, Claim 8, or Claim 9, the medium-information notification method comprising:
a state-detection step performed for detecting whether or not data is recorded in a format that requires predetermined processing performed for making the optical-recording medium into a read-only optical-recording medium and whether or not the predetermined processing is performed, based on the state of the data recorded onto the inserted optical-recording medium; and
a state-notification step performed for notifying the user of a detection result obtained at the state-detection step.
